# EUROPÄISCHE PATENTSCHRIFT

(11) **EP 1 951 040 B1**
(45) Veröffentlichungstag und Bekanntmachung des Hinweises auf die Patenterteilung: **08.04.2009**
(21) Anmeldenummer: 06819471.1
(22) Anmeldetag: 14.11.2006
(51) Int. Cl.: A01N 25/24, A01N 43/16

(54) **GETREIDEKÖRNER BEHANDELT MIT WÄSSRIGEN RHODENTIZID-FORMULIERUNGEN**
CORNSEED TREATED WITH AQUEOUS RODENTICIDE FORMULATION
SEMENCE DE CEREALES TRAITE AVEC DES FORMULATIONS RODENTICIDES AQUEUSES

(30) Priorität: 18.11.2005 EP 05025204
(43) Veröffentlichungstag der Anmeldung: 06.08.2008
(73) Patentinhaber: BASF SE, 67056 Ludwigshafen (DE)
(72) Erfinder: JAKOB, Jürgen, 67127 Rödersheim-Gronau (DE); BREJC, Andrej, 67273 Weisenheim am Berg (DE); BRATZ, Matthias, 67133 Maxdorf (DE)
(86) Internationale Anmeldenummer: PCT/EP2006/068453
(87) Internationale Veröffentlichungsnummer: WO 2007/057393

(56) Entgegenhaltungen:
- EP-A- 0 719 498
- WO-A-03/094612
- GB-A- 728 537

## Beschreibung

Die vorliegende Erfindung umfasst neue mit wässrigen Rhodentizid-Formulierungen gebeizte Getreidekömer, Verfahren zu Herstellung einer körderformulierung sowie Verfahren zur Bekämpfung von Nagetieren basierend auf diesen Formulierungen.

Wässrige Rhodentizid-Formulierungen, mit denen Getreidekörner zur Herstellung entsprechender Köder Formulierung gebeizt werden können, sind aufgrund ihrer leichten Handhabbarkeit für den Fachmann eine attraktive Alternative zu Pulvertormulierungen, da bei mit diesen Formulierungen gebeizten Ködern die Gefahr besteht, dass durch Abrieb oder unerwünschte Verlagerung der Wirkstoff vom Köder in die Umgebung abgeben wird. Das Patent GB 728 537 offenbart z.B. Melonen-Körner gebeizt mit einer wässrigen Formulierung aus Weizenmehl und Rhodentizid.

Die Anforderungen an Rhodentizid enthaltende Beizmittelformulierungen sind zudem hoch: Sie sollten diese beim Aufbringen auf den Köder, der z.B. aus Getreidekörnern bestehen kann, auf der einen Seite eine möglichst gute Haftung des Wirkstoffes am Köder aufgrund der Toxizität des Wirkstoffes bewirken. Auf der anderen Seite sollte eine möglicherweise auftretende Staubbildung bei der Verwendung bzw. Verarbeitung des gebeizten Produktes minimal sein.

Die Aufgabe der vorliegenden Erfindung bestand somit darin, Rhodentizid-Formulierungen bereitzustellen, welche beim Beizen von Getreidekörnern eine möglichst gute Haftung des Wirkstoffes am Getreidekorn bewirken, und/oder bei welchen eine die Staubbildung bei der Verwendung bzw. Verarbeitung des gebeizten Produktes minimal ist.

Die Aufgabe wurde gelöst durch die Bereitstellung einer mit einer wässrigen Rhodentizid Formulierung behandelte und getrocknete Getreidekörner, wobei die Formulierung
(a) mindestens ein Rhodentizid;
(b) mindestens ein Polyol aus der Gruppe Glycol, Polyethylenglycol, Glycerin, Propylenglykol oder Dipropylenglykol;
(c) Polyethylenwachs oder Latexcopolymer auf Basis Styrol/Butadien; und
(d) Monosaccharid und/oder Disaccharid, wobei der Gehalt 10,0 Gew.-% bis 50,0 Gew.- % beträgt,
umfasst.

Ein Vorteil dieser erfindungsgemäßen Formulierungen besteht zudem darin, dass diese Formulierungen prinzipiell ohne jegliche Lösungsmittel auskommen können, was aufgrund von Geruch bzw. Sicherheitserwägungen wünschenswert ist.

Optional können natürlich auch geruchs- und geschmacklose Lösungsmittel eingesetzt werden. Beispielhaft aber nicht einschränkend genannt seien hier Butyrolacton oder Caprolacton. Geeignete Mengen sind 0-10 Gew %, bevorzugt 1 bis 7 Gew %, besonders bevorzugt 2 bis 6 Gew%.

Der Gehalt an Monosaccharid und/oder Disaccharid und/oder Oligosaccharid beträgt vorzugsweise 10,0 bis 35,0 Gew-%, besonders bevorzugt 15,0 -25,0 Gew-%.

Der Gehalt an Rhodentizid beträgt 0,01 Gew.-% bis 30 Gew.- %, vorzugsweise 0,01 bis 1 Gew-%, besonders bevorzugt 0,02 -0,2 Gew-%.

Der Gehalt an Polyol beträgt 1 Gew.-% bis 50 %, bevorzugt 1 bis 20 Gew.-%

Der Gehalt an Kleber beträgt 1 Gew.-% bis 30 Gew.- %, vorzugsweise 1 bis 10 Gew.-%, besonders bevorzugt 1 bis 5 Gew.-%.

Geeignete Rhodentizide sind
Pflanzliche Rhodentizide wie Scillirosid oder Strychnin;
Coumarin Rhodentizide wie Brodifacoum,; Bromadiolone, Coumachlor, Coumafuryl, Coumatetralyl, Difenacoum, Difethialone, Flocoumafen, Warfarin;
Indandion Rhodentizide wie, Chlorophacinon, Diphacinon, Pindon;Anorganische Rhodentizide wie Arsenoxid, Kaliumarsenit, Natriumarsenit, Thalliumarsenit;
Organophosphat Rhodentizide wie Phosacetim;
Pyrimidinamine Rhodentizide wie Crimidine; Thioharnstoff Rhodentizide wie Antu;Harnstoff Rhodentizide wie Pyrinuron;verschiedene Rhodentizide wie Bromethalin, Chloralose, Fluoroacetamid, Flupropadin, Natrium oder Kaliumsalze der Blausäure, Norbormide sowie Natriumfluoroacetat;
vorzugsweise die oben erwähnten Coumarin Rhodentizide; besonders bevorzugt Flocumafen und Difenacum; ganz besonders bevorzugt Flocumafen.

Im Rahmen der vorliegenden Erfindung ist die Verwendung von Disaccharide ganz besonders bevorzugt.

Geeignete Monosaccharide sind Glucose, Fructose,Galactose, vorzugsweise Fructose.

Geeignete Disaccharide sind Saccharose, Maltose,Lactose vorzugsweise Saccharose (z.B. in Reinform oder als Melasse, Rübenzucker)

In Rahmen der Erfindung sind Kleber Latexcopolymere auf Basis Styrol/Butadien, (erhältlich z.B. als Semkote E-125, Uniqema) sowie Polyethylenewachs (z.B. kommerziell erhältlich als Poligen®WE 7 BASF).

Des weiteren können die erfindungsgemäßen Formulierungen optional noch weitere Hilfsmittel enthalten, wie z.B. Tenside (wie Netzmittel, Haftmittel und Dispergiermittel) Antischäumungsmittel, Verdicker, Bakterizide sowie Farbstoffe.

Beispiele für Tenside sind Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether, ferner Kondesationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose.

Beispiele für Verdicker (d.h. Verbindungen, die der Formulierung ein pseudoplastisches Fließverhalten verleihen, d.h. hohe Viskosität im Ruhezustand und niedrige Viskosität im bewegten Zustand) sind beispielsweise Polysaccharide bzw. organische Schichtmineralien wie Xanthan Gum (Kelzan® der Fa. Kelco), Rhodopol® 23 (Rhone Poulenc) oder Veegum® (Firma R.T. Vanderbilt) oder Attaclay® (Firma Engelhardt).

Beispiele für Antischaummittel sind Silikonemulsionen (wie z.B. Silikon® SRE, Firma Wacker oder Rhodorsil® der Firma Rhodia), langkettige Alkohole, Fettsäuren, fluororganische Verbindungen und deren Gemische in Betracht.

Als Bakterizide, die in den erfindungsgemäßen Formulierungen enthalten sein können, kommen alle zur Formulierung von agrochemischen Wirkstoffen üblichen Bakterizide in Betracht wie zum Beispiel Bakterizide basierend auf Diclorophen und Benzylalkoholhemiformal. Beispiele für Bakterizide sind Proxel® der Fa. ICI oder Acticide® RS der Fa. Thor Chemie und Kation® MK der Firma Rohm & Haas.

Als Farbstoffe kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe, sowie pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108 und deren Farbzubereitungen (Dyes) wie z.B. Dispers Blau 69-0007; BASF erhältlichen Verbindungen.

Die vorliegende Erfindung umfasst weiterhin auch ein Verfahren zur Herstellung einer Köderformulierung, dadurch gekennzeichnet, dass man Getreidekörner mit einer erfindungsgemäßen Formulierung behandelt (beizt).

Der Begriff Getreidekörner umfasst sämtliche Arten von Samen, die als ganzes Korn vorliegen, d.h. die nicht zerdrückt, zerhackt oder geteilt sind.

Die Behandlung/Beizung kann nach dem Fachmann bekannten Methoden erfolgen (z.B. durch Besprühen oder Eintauchen/Inkubieren der Getreidekörner in bzw. mit der erfindungsgemäßen Formulierung ggf. in einer entsprechenden Vorrichtung wie einem Conti- oder Chargenbeizer). Hierbei kann die Formulierung mit bis zu 7,5 g Wasser / kg Getreidekörner verdünnt werden. Optional können die behandelten Körner getrocknet werden.

Geeignete Getreidekörner sind Gerste, Weizen, Reis, Mais, Hafer, Roggen, Dinkel, Grünkern, Hirse, Raps und Sonnenblumen vorzugsweise Weizen.
In einer weiteren Ausführungsform umfasst die vorliegende Erfindung umfasst Verfahren zur Bekämpfung von Nagetieren, dadurch gekennzeichnet, dass man die oben beschriebenen Köder an Orten auslegt, die durch die vorstehend genannten Tiere frequentiert werden.

Unter dem Begriff Nagetiere sind neben Ratten und Mäusen auch Bismaratten zu verstehen, vorzugsweise Ratten und Mäuse, besonders bevorzugt Ratten.

Hierbei können z.B. die gebeizten Getreidekörner in geeignete Fallen eingebracht werden und an exponierten Stellen wie z.B. Gängen der Nagetiere, Löcher, in denen die Nagetiere hausen oder and durch deren Kot markierten Stellen aufgestellt werden.

Vorzugsweise sollten die Fallen sollten so geartet sei, daß die Ratte auf jeden Fall die Körner wahrnimmt. Eine Kontrolle der Giftfuttermenge von Zeit zu Zeit gibt Aufschluß über die Wirkung und die Population der Tiere.

### Beispiele

### Beispiel 1 Herstellung der wässrigen Formulierung

### A) Formulierung 1

Storm®- mastermix (40g einer handelsüblichen Flocumafenformulierung, Storm®0,5% Mastermix, enthaltend 5g/kg Flocumafen) wurde zusammen mit 150 g Rübenzucker, 100 g Glycerin, 50g des Klebers Poligen WE 7 (Polyethylenwachs) 648 g Wasser vorgelegt und unter Rühren gelöst besser: vermischt?. Anschließend wurde 10g Dispers Blau zugemischt und homogenisiert. 100g des vorgequollen Xanthan Gum (2 Gew-% Xanthan Gum in Wasser) sowie 2g des Bakterizid (Acticide MBS) wurden zudosiert. Die erhaltene Mischung wurde homogenisiert.

### B) Formulierung 2

Storm®- mastermix (40g einer handelsüblichen Flocumafenformulierung, Storm®0,5% Mastermix , enthaltend 5g/kg Flocumafen) wurde zusammen mit 200 g Rübenzucker, 100 g Polyethyleneglycol E400 Lutrol E 400; BASF, 100g des Klebers Semkote E 125 (synthetischer Latex auf Styrol/Butadienbasis) 408 g Wasser vorgelegt und unter Rühren vermischt. Anschließend wurde 50g Dispers Blau 69-0007 zugemischt und homogenisiert. Zu dieser Mischung wurden 100g des vorgequollen Xanthan Gum (2 Gew-% Xanthan Gum in Wasser) sowie 2g des Bakterizid (Acticide MBS) zudosiert und die so erhaltene Mischung homogenisiert.

Beispiel 2 - Beizung mit den Formulierungen 1 und 2

### Einsatzstoffe:

>2,5 g Wasser
1000 g Weizen
2,5 - 25 g Formulierung A, bzw. Formulierung B

### Herstellung:

Der Weizen wurde in einen handelsüblichen Conti- oder Chargenbeizer (Chargenbeizer Concept ML 2000/ Hersteller Satec) vorgelegt. Im Anschluss wurde und unter schonenden Bedingungen (ca. 690 U/ min die Formulierung A, bzw.

B mittels einer Schlauchpumpe oder einer anderen Dosiereinheit zudosiert-Nach weiteren 30 sec werden die gebeizten Körner in geeignete Behälter
verbracht und bis zur Verpackung trocken gelagert.

## Patentansprüche

1. Mit einer wässrigen Rhodentizid Formulierung behandelte und getrocknete Getreidekörner, wobei die Formulierung
(a) mindestens ein Rhodentizid;
(b) mindestens ein Polyol aus der Gruppe Glycol, Polyethylenglycol, Glycerin, Propylenglycol oder Dipropylenglykol;
(c) Polyethylenwachs oder Latexcopolymer auf Basis Styrol/Butadien als Kleber; und
(d) Monosaccharid und/oder Disaccharid, wobei der Gehalt 10,0 Gew.-% bis 50,0 Gew.- % beträgt,
umfasst.

2. Getreidekörner nach Anspruch 1, **dadurch gekennzeichnet, dass** der Gehalt an Rhodentizid 0,01 Gew.-% bis 30 Gew.- % beträgt.

3. Getreidekörner nach Anspruch 1 oder 2, **dadurch gekennzeichnet, dass** der Gehalt an Polyol 1 Gew.-% bis 50 Gew.- % beträgt.

4. Getreidekörner nach einem der Ansprüche 1 bis 3, **dadurch gekennzeichnet, dass** der Gehalt an Kleber 2 Gew.-% bis 30 Gew.- % beträgt.

5. Getreidekörner nach einem der Ansprüche 1 bis 4, **dadurch gekennzeichnet, dass** als Rhodentizid Flocumafen eingesetzt wird.

6. Getreidekörner nach einem der Ansprüche 1 bis 4, **dadurch gekennzeichnet, dass** als Polyol Glycerin eingesetzt wird.

7. Getreidekörner nach seinem der Ansprüche 1 bis 6, **dadurch gekennzeichnet, dass** als Komponente d) ein Disaccharid eingesetzt wird.

8. Getreidekörner nach einem der Ansprüche 1 bis 7, **dadurch gekennzeichnet, dass** es sich um Körner von Gerste, Weizen, Reis, Mais, Hafer, Roggen, Dinkel, Grünkern, Hirse, Raps oder Sonnenblumen handelt.

9. Verfahren zur Herstellung einer Köderformulierung, **dadurch gekennzeichnet, dass** man Getreidekörner mit einer Formulierung nach einem der Ansprüche 1 bis 7 behandelt und die Körner getrocknet werden.

10. Verfahren nach Anspruch 9, **dadurch gekennzeichnet, dass** es sich um Körner von Gerste, Weizen, Reis, Mais, Hafer, Roggen, Dinkel, Grünkern, Hirse, Raps oder Sonnenblumen handelt.

11. Verfahren zur Bekämpfung von Nagetieren, **dadurch gekennzeichnet, dass** man einen Köder umfassend Getreidekörner gemäß einem der Ansprüche 1 bis 8 an Orten auslegt, die durch die Nagetiere frequentiert werden.

## Claims

1. A cereal grain treated with an aqueous rodenticide formulation and dried, the formulation comprising
(a) at least one rodenticide;
(b) at least one polyol selected from the group consisting of glycol, polyethylene glycol, glycerol, propylene glycol and dipropylene glycol;
(c) polyethylene wax or latex copolymer, based on styrene/butadiene, as adhesive; and
(d) monosaccharide and/or disaccharide, where the content is 10.0 wt% to 50.0 wt%.

2. The cereal grain according to claim 1, wherein the rodenticide content is from 0.01 % by weight to 30% by weight.

3. The cereal grain according to claim 1 or 2, wherein the polyol content is from 1% by weight to 50% by weight.

4. The cereal grain according to any of claims 1 to 3, wherein the adhesive content is from 2% by weight to 30% by weight.

5. The cereal grain according to any of claims 1 to 4, wherein flocumafen is employed as rodenticide.

6. The cereal grain according to any of claims 1 to 4, wherein glycerol is employed as polyol.

7. The cereal grain according to any of claims 1 to 6, wherein a disaccharide is employed as component d).

8. The cereal grain according to any of claims 1 to 7, comprising barley, wheat, rice, maize, oats, rye, spelt, Grünkern, millet/sorghum, rapeseed or a sunflower seed.

9. A process for preparing a bait formulation, wherein cereal grains are treated with a formulation according to any of claims 1 to 7 and the grains are dried.

10. The process according to claim 9, comprising barley, wheat, rice, maize, oats, rye, spelt, Grünkern, millet/sorghum, rapeseed or a sunflower seed.

11. A method of controlling rodents, wherein a bait comprising cereal grains according to any of claims 1 to 8 is placed at locations which are frequented by the rodents.

## Revendications

1. Grains de céréales traités avec une formulation rodenticide aqueuse et séchés, la formulation comprenant
(a) au moins un rodenticide ;
(b) au moins un polyol du groupe formé par le glycol, le polyéthylèneglycol, le glycérol, le propylèneglycol ou le dipropylèneglycol ;
(c) de la cire de polyéthylène ou un copolymère en latex à base de styrène/butadiène comme adhésif ; et
(d) un monosaccharide et/ou un disaccharide, où la teneur est de 10,0% en poids à 50,0% en poids.

2. Grains de céréales selon la revendication 1, **caractérisés en ce que** la teneur en rodenticide est de 0,01% en poids à 30% en poids.

3. Grains de céréales selon la revendication 1 ou 2, **caractérisés en ce que** la teneur en polyol est de 1% en poids à 50% en poids.

4. Grains de céréales selon l'une quelconque des revendications 1 à 3, **caractérisés en ce que** la teneur en adhésif est de 2% en poids à 30% en poids.

5. Grains de céréales selon l'une quelconque des revendications 1 à 4, **caractérisés en ce qu'**on utilise du Flocumafen comme rodenticide.

6. Grains de céréales selon l'une quelconque des revendications 1 à 4, **caractérisés en ce qu'**on utilise du glycérol comme polyol.

7. Grains de céréales selon l'une quelconque des revendications 1 à 6, **caractérisés en ce qu'**on utilise un disaccharide comme composant d).

8. Grains de céréales selon l'une quelconque des revendications 1 à 7, **caractérisés en ce qu'**il s'agit des grains d'orge, de blé, de riz, de maïs, d'avoine, de seigle, d'épeautre, d'épeautre vert séché, de millet, de colza ou de tournesol.

9. Procédé pour la préparation d'une formulation d'appât, **caractérisé en ce qu'**on traite des grains de céréales avec une formulation selon l'une quelconque des revendications 1 à 7 et les grains sont séchés.

10. Procédé selon la revendication 9, **caractérisé en ce qu'**il s'agit des grains d'orge, de blé, de riz, de maïs, d'avoine, de seigle, d'épeautre, d'épeautre vert séché, de millet, de colza ou de tournesol.

11. Procédé pour lutter contre des rongeurs, **caractérisé en ce qu'**on étale un appât comprenant des grains de céréales selon l'une quelconque des revendications 1 à 8 en des endroits fréquentés par les rongeurs.
